# EUROPEAN PATENT APPLICATION

(11) **EP 4 556 088 A1**
(43) Date of publication of application: **21.05.2025**
(21) Application number: 24210153.3
(22) Date of filing: 31.10.2024
(51) Int. Cl.: A63F 13/67, G06N 3/00, A63F 13/86, A63F 13/87, A63F 13/58

(54) **CONTEXT AWARE AI NONPLAYER CHARACTERS FOR VIDEO GAME INTERACTIVITY**

(30) Priority: 17.11.2023 US 202318513451
(71) Applicant: Sony Interactive Entertainment Inc., Tokyo 108-0075 (JP)
(72) Inventor: CHEW, Kelsey, San Mateo (US)
(74) Representative: D Young & Co LLP

(57) **Abstract**

A method for generating nonplayer characters that are context aware in video games includes executing a video game to enable gameplay using a player character controlled by a player. The gameplay produces game state data. During execution of the video game, scene interactivity data is identified from the game state data. The scene interactivity data is filtered based on filtering settings, with the filtering being configured to identify target interactivity data that is processed to generate context aware logic. The context aware logic is applied to a nonplayer character (NPC) that is associated with a current scene of gameplay. The context aware logic transforms the behavior of the NPC to be contextually interactive with the player character during the gameplay by the player. A method for generating a nonplayer character for a video game also is described.

## Description

### BACKGROUND

Video games often include both player characters and nonplayer characters. A player character is a character in the video game that is controlled by a player of the video game. A nonplayer character (NPC) is a character in the video game that is controlled by the game logic. The NPC typically engages in preplanned behavior that is carried out without regard to the objective that a user controlling a player character is trying to accomplish in the scene of the video game. For example, the NPC could walk around in a predefined pattern in a scene of the video game. In the case of a game scene which takes place in a saloon, the NPC might enter the saloon, walk to the bar, order a drink, consume the drink, and then walk out of the saloon without interacting with a player character situated at the bar. Alternatively, the NPC might briefly interact with the player character at the bar by issuing a simple greeting, e.g., "Howdy" or "Good Evening." In either scenario, the preplanned behavior of the NPC is a sequence of actions that is not specific to the user. As such, the NPC essentially serves as a generic "extra" in the scene of the game. Thus, as the preplanned behavior of the NPC does not take into account the context of the user, the actions of the NPC are not related to what the user is trying to accomplish in the game. Consequently, the presence of NPCs in the game might be a distraction to the user or might make the game less appealing to play for the user.

Further, in some video games, the preplanned behavior of the NPC is varied by randomly selecting the action (or actions) to be performed by the NPC using a random seed generator. For example, the action to be performed by the NPC can be randomly selected from among a group of actions. The number of actions included in the group is typically relatively small, however. Thus, even though the preplanned behavior of the NPC will be varied based on the random selection, if a user plays the video game on a regular basis, the user will eventually experience the NPC engaging in repetitive behavior because the number of potential actions to be performed by the NPC is relatively small. As a result of experiencing the NPC engage in repetitive behavior, e.g., hearing the NPC deliver the same line of dialogue over and over, the user's level of interest in playing the game might decrease over the course of time.

It is in this context that embodiments arise.

### SUMMARY

In an example embodiment, a method for generating nonplayer characters that are context aware in video games is provided. The method includes executing a video game to enable gameplay using a player character controlled by a player, with the gameplay producing game state data. The method also includes identifying scene interactivity data from the game state data during execution of the video game. The method further includes filtering the scene interactivity data based on filtering settings, with the filtering being configured to identify target interactivity data that is processed to generate context aware logic. Still further, the method includes applying the context aware logic to a nonplayer character (NPC) that is associated with a current scene of gameplay, where the context aware logic transforms the behavior of the NPC to be contextually interactive with the player character during the gameplay by the player.

In one embodiment, the context aware logic is compiled and instrumented to execute with interactivity logic of the NPC, and the behavior of the NPC is transformed for a period of time during which the context aware logic is applied. In one embodiment, a gameplay mode defines when the context aware logic is applied.

In one embodiment, the behavior of the NPC is transformed to be contextually interactive with the player character by causing the NPC to engage in speech communication with the player character. In another embodiment, the behavior of the NPC is transformed to be contextually interactive with the player character by causing the NPC to perform an action in relation to the player character. In yet another embodiment, the behavior of the NPC is transformed to be contextually interactive with the player character by causing the NPC to provide assistance to the player character.

In one embodiment, the method further includes applying activity settings that define whether a lower degree of context aware logic or a higher degree of context aware logic is to be applied to the NPC. In this embodiment, applying a lower degree of context aware logic to the NPC reduces a degree to which the NPC is contextually interactive with the player character during gameplay by the player, and applying a higher degree of context aware logic to the NPC increases a degree to which the NPC is contextually interactive with the player character during gameplay by the player. In one embodiment, during execution of the video game, the target interactivity data is continuously generated for a current scene of gameplay, and the processing of the target interactivity data includes executing a context interactivity model that analyzes classified features of the target interactivity data to generate a descriptive interactivity context for the current scene.

In one embodiment, the method further includes processing a generative artificial intelligence (AI) model that uses inputs regarding the descriptive interactivity context for the current scene, game training data from the video game, and user profile data, with the generative AI model being configured to produce the context aware logic. In one embodiment, the video game is an online game having one or more spectators, or a non-online game. In one embodiment, the target interactivity data includes comments from one or more spectators, and the behavior of the NPC is transformed by having the NPC communicate a sentiment of the one or more spectators to the player character. In one embodiment, the method further includes applying mode settings that moderate an amount and a type of the sentiment of the one or more spectators that the NPC communicates to the player character.

In another example embodiment, a method for generating a nonplayer character for a video game is provided. The method includes executing the video game, with the video game including the nonplayer character (NPC). The NPC is configured to interact in a scene of the video game without control of a real player of the video game. The method also includes processing game state data to identify a context of gameplay by a player character of the video game during execution of the video game, and applying context aware logic to the NPC. The context aware logic applied to the NPC is configured to transform the behavior of the NPC to be contextually interactive with the player character.

In one embodiment, the behavior of the NPC being contextually interactive with the player character is represented by having the NPC generate comments to the player character regarding actions occurring during execution of the video game. In another embodiment, the behavior of the NPC being contextually interactive with the player character is represented by having the NPC generate comments regarding chatter observed from one or more spectators regarding actions occurring during execution of the video game.

In one embodiment, the applying of the context aware logic to the NPC occurs for a period of time when the player character is within a halo space of the NPC in a scene of the video game. In this embodiment, the behavior of the NPC is transformed to be contextually interactive with the player character for the period of time during which the context aware logic is applied.

In yet another example embodiment, a non-transitory computer readable medium containing program instructions for generating a nonplayer character for a video game is provided. The execution of the program instructions by one or more processors of a computer system causes the one or more processors to carry out the operations of executing the video game, the video game including the nonplayer character (NPC), with the NPC being configured to interact in a scene of the video game without control of a real player of the video game, processing game state data to identify a context of gameplay by a player character of the video game during execution of the video game, and applying context aware logic to the NPC, with the context aware logic being configured to transform the behavior of the NPC to be contextually interactive with the player character.

In one embodiment, the behavior of the NPC being contextually interactive with the player character is represented by having the NPC generate comments to the player character regarding actions occurring during execution of the video game. In another embodiment, the behavior of the NPC being contextually interactive with the player character is represented by having the NPC generate comments regarding chatter observed from one or more spectators regarding actions occurring during execution of the video game.

In one embodiment, the applying of the context aware logic to the NPC occurs for a period of time when the player character is within a halo space of the NPC in a scene of the video game. In this embodiment, the behavior of the NPC is transformed to be contextually interactive with the player character for the period of time during which the context aware logic is applied.

Other aspects and advantages of the disclosures herein will become apparent from the following detailed description, taken in conjunction with the accompanying drawings, which illustrate by way of example the principles of the disclosures.

### BRIEF DESCRIPTION OF THE DRAWINGS

Figure 1 is a simplified schematic diagram that illustrates a video game that includes a plurality of nonplayer characters.
Figure 2 is a simplified schematic diagram that illustrates a video game in which the behavior of a nonplayer character (NPC) is transformed by applying context aware logic to the NPC, in accordance with one embodiment.
Figure 3 is a simplified schematic diagram that illustrates additional details of the context aware NPC logic generator, in accordance with one embodiment.
Figure 4 is a simplified schematic diagram that illustrates additional details of the filtering of the scene interactivity data, in accordance with one embodiment.
Figure 5 is a simplified schematic diagram that illustrates the use of activity settings to adjust the degree to which the context aware logic is to be applied to the NPC, in accordance with one embodiment.
Figure 6A is a simplified schematic diagram that illustrates the mode switching that occurs as a player character moving within a game space encounters NPCs, in accordance with one embodiment.
Figure 6B is a diagram that summarizes the mode switching for NPC1, NPC2, and NPC3 shown in Figure 6A.
Figure 7 illustrates components of an example device that can be used to perform aspects of the various embodiments of the present disclosure.

### DETAILED DESCRIPTION

In the following description, numerous specific details are set forth in order to provide a thorough understanding of the example embodiments. However, it will be apparent to one skilled in the art that the example embodiments may be practiced without some of these specific details. In other instances, process operations and implementation details have not been described in detail, if already well known.

Embodiments of the present invention provide methods for generating nonplayer characters in a video game. In one embodiment, the game logic can be modified using one or more machine learning systems. Some machine learning systems learn the context of the gaming activity occurring in particular games and are useful for identifying what type of activities are occurring in the game and determining the context of a game activity to a player character in the scene. In some embodiments, nonplayer characters (NPCs) are introduced into game scenes with context aware logic that enables the NPCs to be dynamically programmed to understand the context of the gaming environment as well as the context of the gaming environment relative to the player character. By providing an NPC with intelligence that can be modified during gameplay, the NPC can react to game scenes in real time and provide timely and useful information to the player character including, by way of example, feedback regarding activities that are occurring in the game, coaching regarding how to play the game, and commentary regarding developments in the game. In addition, the manner in which the NPC interacts with the player character can be set such that it appears that the NPC is actively engaging with the player character rather than merely performing random or preplanned actions. This can be accomplished by having the NPC appear to look the player character in the eye during the interaction and, where appropriate, by having the NPC make relevant movements during the interaction, e.g., pointing at a relevant object or pointing in a relevant direction.

In some embodiments, the extent to which the NPC interacts with a player character can be set so that the NPC interacts either more or less with the player character, depending on the context of the game or the profile of the user. If a user's profile indicates that the user does not like extensively interacting with NPCs so as to avoid being distracted from playing the game, then the NPC can be programmed to be less interactive with the player character of the user. The type of game activities for which the player likes to have either more or less interaction with NPCs can be learned over time using machine learning. In some embodiments, a large language model can be used in conjunction with generative artificial intelligence (AI) processing to provide the NPC with language capability to communicate with the player character, e.g., have a two-way conversation, regarding activities occurring in the game. Various embodiments are described herein that provide ways for transforming the behavior of NPCs so that the NPCs can be contextually interactive with the player character (and thereby the player) rather than having the NPCs being limited to carrying out just random and/or preplanned actions.

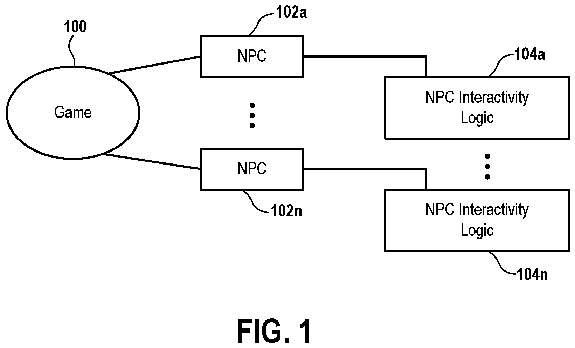

Figure 1 is a simplified schematic diagram that illustrates a video game that includes a plurality of nonplayer characters (NPCs). As shown in Figure 1, video game 100 includes a plurality of NPCs 102a-102n. The number of NPCs included in the video game 100 can be varied to suit the needs of the particular game. By way of example, the video game can include 2 NPCs, 10 NPCs, 100 NPCs, etc. Each NPC 102 has appearance graphics, physics, rigging, animation files, and physical attributes and these components are used to render the NPCs in the video game. As is known to those skilled in the art, the player characters also have appearance graphics, physics, rigging, animation files, and physical attributes that are used to render the player characters in the video game. A game engine, which is underlying software framework for the video game, provides the core functionality needed to process graphics, physics, audio, and input handling. Game logic includes the game-specific code responsible for defining gameplay rules, character behavior, game objectives, and event handling. The game engine and the game logic interact to create the video game. This interaction between the game engine and the game logic typically follows a loop. The game engine runs a main game loop in which it handles core tasks such as rendering frames, updating physics simulations, processing input, and triggering game events. During each iteration of the loop, the game logic is executed to update the game state based on player input and the rules of the game.

Each NPC 102 includes NPC interactivity logic 104, which includes code that defines the preplanned behavior of each NPC. As shown in Figure 1, NPC 102a includes corresponding NPC interactivity logic 104a and NPC 102n includes corresponding NPC interactivity logic 104n. The preplanned behavior of an NPC 102 can include a variety of different actions, e.g., moving around a scene of the video game in a predetermined pattern, or delivering a scripted line of dialogue upon being approached by a player character. These simple and repetitive actions are not specific to the user, i.e., a player controlling a player character, because the NPC interactivity logic 104 is not aware of the context of the user in the game. Moreover, these actions are carried out without regard to the presence of the user in the scene of the game. Consequently, the preplanned behavior of each NPC 102 is not related to what the user is trying to accomplish in the scene of the game, e.g., completing a quest, scoring points, beating the boss, etc.

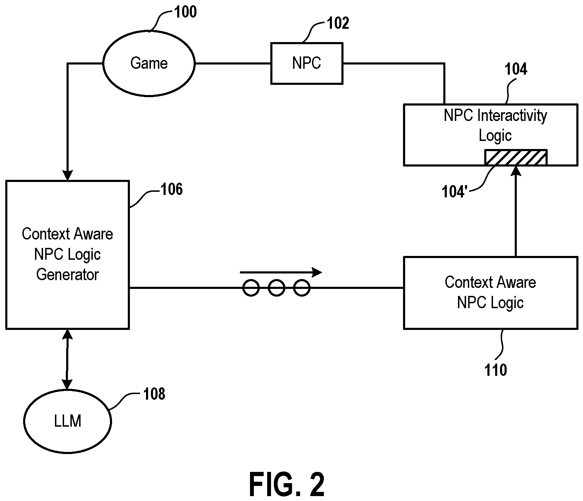

Figure 2 is a simplified schematic diagram that illustrates a video game in which the behavior of an NPC is transformed by applying context aware logic to the NPC, in accordance with one embodiment. As shown in Figure 2, video game 100 includes an NPC 102, which is provided with NPC interactivity logic 104. As described herein, NPC interactivity logic 104 includes code that defines the preplanned behavior of the NPC 102. During execution of video game 100, game state data is continuously generated and this game state data is continuously communicated to context aware NPC logic generator 106. As is known to those skilled in the art, the game state data provides a stream of metadata descriptive of everything that is happening in the game. By way of example, the metadata can include what the user did in the game, what buttons were pushed, how the buttons were pushed, and what the user achieved (e.g., did the user win, lose, etc.). As is known to those skilled in the art, the game state data includes all of the game-related data required for the game engine (in conjunction with the game logic) to recreate the user's gameplay of the game. The game state data also can include other data not directly involved with gameplay of the game, e.g., data from the user's camera generated while the user is playing the game, audio data generated while the user is playing the game, e.g., two-way chat with one or more other players, and data generated by spectators watching the user play the game, e.g., spectator comments made in the spectator chat section of the game.

The context aware NPC logic generator 106 processes the game state data to identify the context of the gameplay of a player character of the video game 100 during execution of the video game. In one embodiment, the context aware NPC logic aware generator 106 has logic regarding the video game 100 that enables the context aware NPC logic generator to identify what is going on in the game using the game state data. In particular, for any given moment in time during execution of the video game 100, the game state data provides a snapshot of the gameplay at that moment in time from which the context aware NPC logic generator 106 can identify the context of the gameplay. By way of example, if the game state data provides a snapshot of a game scene that includes, among other things, clouds, birds, a path, a dog, and a player with a shield, the logic regarding video game 100 in context aware NPC logic generator 106 could determine that the context of the gameplay involves a dog chasing the player character in level 5 of the game and that it is likely that the player character will soon get bit by the dog. Once the context of the gameplay has been identified, the context aware NPC logic generator 106 can generate suitable logic for transforming the behavior of NPC 102 to be contextually interactive with the player character. By way of example, the behavior of NPC 102 can be transformed to be contextually interactive with the player character by causing the NPC to engage in speech communication with the player character, by causing the NPC to perform an action in relation to the player character, or by causing the NPC to provide assistance to the player character.

In one embodiment, the behavior of the NPC 102 is transformed to be contextually interactive with the player character by having the NPC provide comments to the player character regarding actions occurring during execution of the game. By way of example, in the case of the game scene in which the dog is chasing the player character, the NPC 102 could provide assistance to the player character by giving instructions to the player character, e.g., telling the player character that the dog will back down if she puts her shield up and moves toward the dog. Alternatively, the NPC 102 could provide assistance to the player character by performing an action, e.g., engaging with the dog to give the player character time to get away from the dog.

In another embodiment, the behavior of the NPC 102 is transformed to be contextually interactive with the player character by having the NPC provide comments to the player based on data which is not directly involved with gameplay of the game. In one example, if the game state data generated during execution of the game includes data from the user's camera that shows that the user's room is messy, the NPC 102 could make a comment to the player character encouraging her to clean up her room and/or make her bed. In another example, if the game state data generated during execution of the game includes data from the spectator chat section of the game, then the NPC 102 could make a comment to the player character that reflects the sentiment of the chatter observed from one or more spectators during execution of the game. For example, if the chatter demonstrates that the spectators believe that the user does not know about the monster hiding in the mountains, then the NPC 102 could tell the player character to watch out for the monster before the player character heads into the mountains.

In scenarios in which the context aware logic being generated by the context aware NPC logic generator 106 involves speech communication (e.g., talking) with the player character, the context aware NPC logic generator communicates with a Large Language Model (LLM) 108, which is a type of artificial intelligence (AI) algorithm that can generate human-like text or speech. As is known to those skilled in the art, LLMs are trained on massive amounts of data, which is typically in the form of text or speech, and can use this data to understand, summarize, generate, and predict new content. By communicating with the LLM 108 during execution of the video game 100, the context aware NPC logic generator 106 can dynamically generate the context aware logic required to enable NPC 102 to engage in speech communication with the player character. By way of example, in a game scene which takes place in a saloon, the NPC 102 can approach the player character at the bar and engage in a conversation with the player character.

The context aware logic generated by context aware NPC logic generator 106 is transmitted to context aware NPC logic 110 on a continuous basis during execution of the video game 100. In one embodiment, the context aware logic received by context aware NPC logic 110 is code, e.g., a script, that defines how the behavior of the NPC 102 is to be transformed to be contextually interactive with the player character. As described above with reference to Figure 1, NPC interactivity logic 104 includes the code that defines the preplanned behavior of each NPC 102. Thus, to transform the behavior of an NPC 102 to be contextually interactive with a player character, the NPC interactivity logic 104 must be modified to include new, context aware code that defines the transformed behavior of the NPC. To this end, context aware NPC logic 110 also includes instructions for modifying the NPC interactivity logic 104 to include the new, context aware code.

In one embodiment, the context aware logic is compiled and instrumented to execute with interactivity logic of the NPC. In one embodiment, the context aware NPC logic 110 first identifies the code in NPC interactivity logic 104 that is to be replaced, namely, the code which defines the preplanned behavior of the NPC. In this embodiment, the context aware logic 110 then inserts jump instructions into the code in the NPC interactivity logic 104 that will cause the new, context aware code (from context aware NPC logic generator 106) to be executed rather than the code that is to be replaced. In another embodiment, the context aware NPC logic 110 causes the code in NPC interactivity logic 104 to be recompiled with the new, context aware code rather than the code that is to be replaced. In this example, when the code in the NPC interactivity logic is executed, the executed code includes the new, context aware code rather than the code that is to be replaced (the code that defines the preplanned behavior of the NPC).

With the addition of the context aware code to NPC interactivity logic 104 by context aware NPC logic 110, the NPC interactivity logic 104 is converted to NPC interactivity logic 104', as shown in Figure 2. The execution of the context aware code in NPC interactivity logic 104' transforms the behavior of the NPC 102 to be contextually interactive with the player character during gameplay by the user. By way of example, and as described in more detail herein, the behavior of the NPC 102 can be transformed to be contextually interactive with the player character by causing the NPC to engage in speech communication with the player character, by causing the NPC to perform an action in relation to the player character, or by causing the NPC to provide assistance to the player character. Further, during gameplay by the user, the context aware code in NPC interactivity logic 104' is continuously modified based on the context aware logic being dynamically generated by the context aware NPC logic generator 106, which continuously receives and processes the state data being generated during gameplay. By continuously modifying the context aware code in NPC logic 104', the actions of the NPC 102 can be dynamically adjusted as needed so that the behavior of the NPC remains contextually interactive with the player character during gameplay by the user. For example, in the example in which a game scene takes place in a saloon and the NPC 102 approaches the player character at the bar and starts a conversation, the actions of the NPC can be dynamically adjusted so that the NPC remains contextually interactive with the player character during the conversation, e.g., the NPC maintains proper eye contact with the player character, the NPC maintains a suitable distance from the player character, and the NPC responds appropriately to the player character when the player character speaks to the NPC.

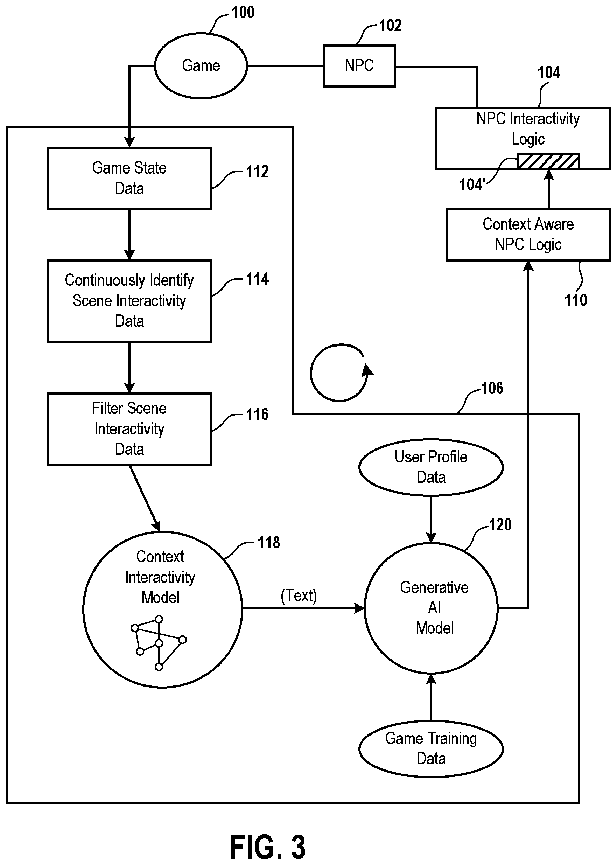

Figure 3 is a simplified schematic diagram that illustrates additional details of the context aware NPC logic generator, in accordance with one embodiment. As shown in Figure 3, the context aware NPC logic generator 106 receives, in operation 112, the game state data generated during execution of video game 100. In one embodiment, the game state data is received via a suitable application programming interface (API) and is stored in memory for use. As is known to those skilled in the art, the game state data provides a stream of metadata descriptive of everything that is happening in the game. By way of example, the metadata can describe actions occurring in the game, game context, tracking history, and state variables useable by the game engine (in conjunction with the game logic) to replay the game as well as to analyze interactivity, actions, progress, etc.

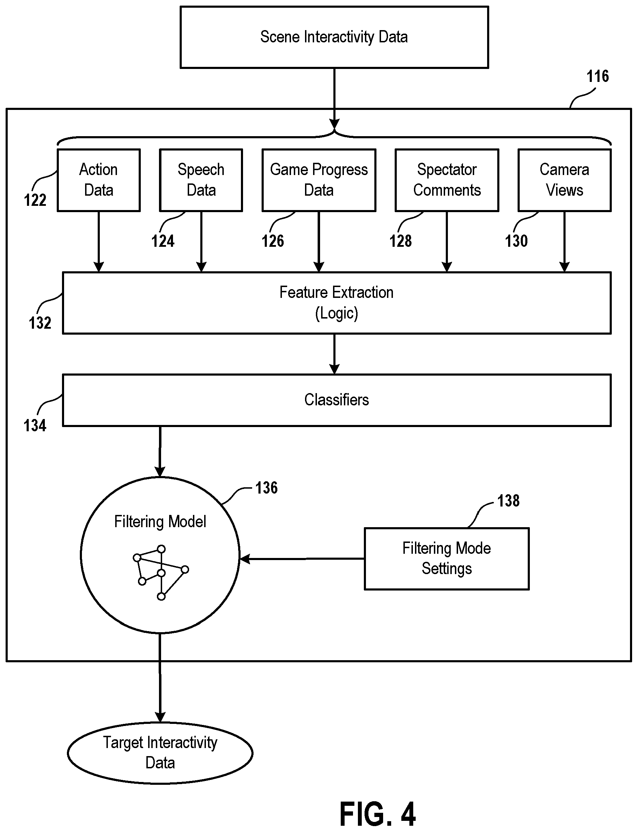

In operation 114, during execution of video game 100, scene interactivity data is continuously identified from the game state data. Generally speaking, the scene interactivity data can be identified by continuously parsing the game state data to identify what activity is taking place in a game scene at a given moment and then applying rules to determine whether such activity constitutes a significant event that should be identified as scene interactivity data. In one embodiment, a snapshot of the game state data is taken periodically, e.g., every 3 seconds, every 5 seconds, every 10 seconds, etc., and the snapshot of the game state data is processed by the game engine (in conjunction with the game logic) to determine what activity is taking place in the game scene at the time of the snapshot. By way of example, the activity taking place in the game scene could be determined to be a player character walking along a river, a player character scoring 50 points for completing a quest, a player character is driving a car, or a player character failing to beat the boss for the third time in a row. A set of rules is then applied to the activity taking place in the game scene to determine whether the activity constitutes a significant event. In one embodiment, an activity taking place in the game scene is considered to be a significant event if the activity involves a player character being actively controlled by a user, and each significant event is identified as scene interactivity data. On the other hand, if the activity in the game scene does not involve a player character being actively controlled by a user, e.g., the player character is passively watching other game activity occur, the activity is not considered to be a significant event and is not identified as scene interactivity data. In other embodiments, scene interactivity data is not limited to significant events taking place in a game scene. By way of example, in these other embodiments, scene interactivity data can include speech data, game progress data, spectator comments, and camera views, as explained in more detail below with reference to Figure 4.

In operation 116, the scene interactivity data is filtered based on filtering settings. In one embodiment, the filtering settings are configured to identify target interactivity data that is processed to generate context aware logic, as will be described in more detail below. Generally speaking, the filtering operation analyzes the scene interactivity data and excludes any data in the scene interactivity data that is not relevant to the issue of identifying where an NPC should go in the game scene so as to be contextually interactive with the player character. By way of example, in a game scene in which a player character is playing fetch with a dog, the game scene will typically include other elements, e.g., birds, trees, clouds, etc., which are not relevant to identifying where the NPC should go in the game scene. As such, the filtering operation will exclude these other elements from the scene interactivity data. The data not excluded from the scene interactivity data by the filtering operation includes data relevant to the issue of identifying where the NPC should go in the game scene and this data is identified as the target interactivity data.

The target interactivity data generated in operation 116 by filtering the game state data is fed into context interactivity model 118. The context interactivity model 118 is trained on many prior games to build a model that understands scene interactivity and scene context. The context interactivity model 118 processes classified features of the target interactivity data to generate a descriptive interactivity context for the current game scene. For example, if context interactivity model 118 receives target interactivity data indicating that the current game scene involves the player character driving a car on the winding road in level 3 of a racing game, the context interactivity model 118 will process classified features of the target interactivity data and determine the likely outcome of this game scene. If the processing of the classified features determines, based on the model's training on many prior games, that the player character is likely going to slide into a wall trying to make the upcoming hairpin turn, then the context interactivity model 118 will generate a descriptive interactivity context stating that the player character's car is about to slide into a wall trying to make the hairpin turn in level 3 of the game. The descriptive interactivity context generated by context interactivity model 118 is output to generative artificial intelligence (AI) model 120. In one embodiment, the context interactivity model 118 outputs the descriptive interactivity context in the form of a text sentence that is optimized to include as much descriptive information regarding the context interactivity as possible.

The generative artificial intelligence (AI) model 120 is a model designed to generate context aware logic for controlling the NPC. The generative AI model 120 understands the video game 100 from game training data used to build the model and has access to the user's profile data. The generative AI model 120 also understands the context of what is happening in the game by virtue of receiving as input the descriptive interactivity context for the current game scene generated by the context interactivity model 118. The generative AI model processes the inputs regarding the descriptive interactivity context for the current game scene, the game training data from the game, and the user profile data, and generates context aware logic that can be applied to the NPC. To illustrate, in the example in which the player character is driving a car on a winding road, the descriptive interactivity context for the current game scene is that the player character's car is about to slide into a wall trying to make the hairpin turn in level 3 of the game. The user's profile data indicates that the user is a fairly skilled player and is open to receiving in-game assistance from the game. And the generative AI model 120 has been trained using game training data that includes, among other data, many prior games of the racing game being played by the user. The generative AI model 120 processes these inputs and generates suitable context aware logic for controlling the NPC so that the NPC provides assistance to the player character. In particular, in this example, the generative AI model 120 produces context aware logic that calls for an NPC to give the following instructions to the player character: double click the trigger R2 and pull back on both joysticks just before entering the hairpin turn, which is coming up in the next 3 seconds. These instructions are formulated by the generative AI model 120 to help the player character avoid sliding into the wall while making the hairpin turn. By way of example, the NPC could be an NPC acting as the player character's pit boss and wearing a headset to provide audio instructions to the player character. To further assist the user, the NPC could be displayed on the user's screen, e.g., in a pop-up window or split screen view, and the NPC could face either the user or the player character while giving the instructions. In another example, the NPC could appear on a display panel in the car or as a heads-up display in the car and the speak directly to the player character driving the car while giving the instructions.

With continuing reference to Figure 3, the context aware logic produced by the generative AI model 120 of context aware NPC logic generator 106 is output to context aware logic 110 (also shown in Figure 2). The context aware logic produced by the generative AI model 120 can be output to context aware NPC logic 110 in the form of code, instructions, or a combination of code and instructions. As described above with reference to Figure 2, the context aware NPC logic 110 modifies the code in NPC interactivity logic 104 in accordance with the context aware logic from the context aware NPC logic generator 106. This converts NPC interactivity logic 104 into NPC interactivity logic 104' and the execution of the context aware code in NPC interactivity logic 104' transforms the behavior of the NPC 102 to be contextually interactive with the player character during gameplay by the user. In the example in which the player character is driving a car on the winding road, the behavior of the NPC pit boss is transformed from performing random, preplanned actions in the pit area to providing timely assistance to help the player character avoid hitting a wall while making a hairpin turn. As indicated by the circular arrow in Figure 3, the game state data generated during execution of video game 100 is continuously processed to dynamically produce context aware logic for transforming the behavior of the NPC 102 during gameplay by the user, as described in detail above with reference to Figure 2. This enables the behavior of the NPC 102 to be dynamically adjusted as needed so that the behavior of the NPC remains contextually interactive with the player character during gameplay by the user.

In one embodiment, a gameplay mode defines when the context aware logic is applied to the NPC 102. In this embodiment, the gameplay mode can be set by either the user, e.g., via a suitable graphical user interface (GUI), or by the game system. By way of example, the user could select a gameplay mode that calls for context aware logic to be applied to NPC 102 when the user is playing a difficult portion of a game so that the NPC could provide assistance to the player character of the user. In this example, the behavior of the NPC 102 is transformed for the period of time during which the context aware logic is applied, namely, the difficult portion of the game. Once the user finishes playing the difficult portion of the game, the context aware logic is no longer applied to NPC 102. In another embodiment, the game system could recognize that the user could benefit from assistance in an upcoming portion of the game and automatically select a gameplay mode that calls for context aware logic to be applied to NPC 102 during that portion of the game.

Figure 4 is a simplified schematic diagram that illustrates additional details of the filtering of the scene interactivity data, in accordance with one embodiment. As shown in Figure 4, in operation 116 (also shown in Figure 2) in which the scene interactivity data is filtered, the scene interactivity data to be filtered includes action data 122, speech data 124, game progress data 124, spectator comments 126 (optional), and camera views 130 (optional). The action data 122 includes the action data being generated in the game being played by the user. The speech data 124 can include speech data from the user, e.g., the user talking to other players during the scene, as well as speech data generated by the game, e.g., NPCs talking to other NPCs or NPCs talking to player characters. The game progress data 128 includes data from the game that reflects the progress the user has made in the game, e.g., beat the boss 3 straight times and is currently on level 4. The spectator comments 128, which can optionally be included in the scene interactivity data to be filtered, includes spectator comments made during the game scene or about the game scene, e.g., spectator comments made in the spectator chat section of the game. The camera views 130, which can optionally be included in the scene interactivity data to be filtered, can include data from the user's camera generated while the user is playing the game. The data from the user's camera can include camera views that show items of interest to the user in the background, e.g., a poster of a basketball player or pop music star, a collection of books in a bookcase, a tennis racket, etc.

In operation 132, features are extracted from the scene interactivity data, which can include all or some of action data 122, speech data 124, game progress data 126, spectator comments 128, and camera views 130. In one embodiment, the features are extracted by a feature extractor which includes code for determining which data is particularly relevant to the game scene. In particular, the feature extractor extracts the data that is determined to be particularly relevant to the game scene and eliminates the data that is determined to be less relevant to the game scene. The feature extractor then divides the extracted data into smaller groups of data by identifying a feature that describes the data in each group. In operation 134, the features extracted in operation 132 are labeled for use in a machine learning model, e.g., filtering model 136, by feature classifiers. In particular, each feature classifier adds an appropriate label to each extracted feature which is considered useful for training the filtering model 136. The classified features, namely, the extracted scene interactivity data which has been tagged with labels, are fed into the filtering model 136.

In addition to the scene interactivity data tagged with labels, filtering model 136 also receives filtering mode settings 138 as input. The filtering mode settings can be set by the user or set by the game system. In one embodiment, the filtering mode settings are set by the user via any suitable graphical user interface, e.g., a slider. Depending on the input received from the filtering mode settings 138, the filtering model 136 will filter the tagged scene interactivity data with a relatively high degree of filtering, a moderate degree of filtering, or no filtering at all. In one embodiment, a relatively high degree of filtering will remove scene interactivity data that does not focus on the main interactivity occurring in the game scene. For example, if the main interactivity in the game scene involves the player character kicking a soccer ball, then only the scene interactivity data regarding the player character kicking the soccer ball would be kept. A moderate degree of filtering will remove scene interactivity data that involves interactivity that is remote to the main interactivity in the game scene, but keep scene interactivity data that is proximate to the main interactivity occurring in the game scene. In the soccer example, the scene interactivity data kept would include not only the scene interactivity data regarding the player character kicking the soccer ball, but also the scene interactivity data regarding other player characters and NPCs that are proximate to the player character kicking the soccer ball. In the case in which there is no filtering at all, the scene interactivity data is left as is. In one embodiment, the filtering model 136 is a machine learning model that learns over time which scene interactivity data is more important and which scene interactivity data is less important. The scene interactivity data that is passed through the filtering model 136 is identified as target interactivity data. Of all the interactivity data associated with a game scene, the target interactivity data is the interactivity data associated with the game scene that will be used to influence the behavior of the NPC. In addition to the action data generated during gameplay by the user, the target interactivity data also can include, by way of example, voices (e.g., audio data), chatter (e.g., spectator comments), the user's level of success or failure in the game, and the user's need for help in the game.

In one embodiment in which the NPC communicates sentiment from spectators to the player character, mode settings, e.g., filtering mode settings, are applied to moderate the amount and type of the sentiment of the spectators that is communicated to the NPC. In gaming environments in which the sentiment of spectators is primarily respectful in that it provides either positive comments or constructive criticism, then the mode settings can be set to allow such sentiment to be communicated to the player character. On the other hand, in gaming environments in which the sentiment of spectators is disrespectful in that it includes a relatively large number of negative comments from so-called trolls, then the mode settings can be set to block or otherwise prevent such sentiment from being communicated to the player character.

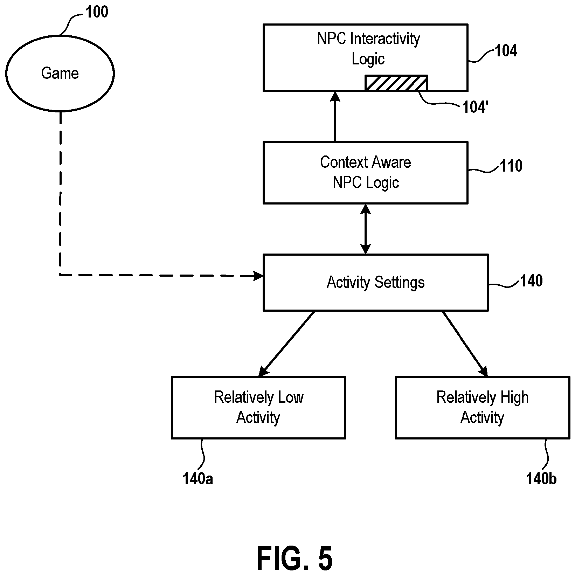

Figure 5 is a simplified schematic diagram that illustrates the use of activity settings to adjust the degree to which the context aware logic is to be applied to the NPC, in accordance with one embodiment. As shown in Figure 5, video game 100 is in communication with activity settings 140, which define the degree to which the context aware logic is to be applied to the NPC. In one embodiment, the activity settings 140 include a low activity setting 140a and a high activity setting 140b. The low activity setting 140a causes a lower degree of context aware logic to be applied to the NPC, which reduces the degree to which the NPC is contextually interactive with the player character during gameplay by the user. The high activity setting 140b causes a higher degree of context aware logic to be applied to the NPC, which increases the degree to which the NPC is contextually interactive during gameplay by the user. In one embodiment, the video game 100 transmits instructions to activity settings 140 to select either low activity setting 140a or high activity setting 140b. The instructions can be generated based on input from the user or can be generated by the video game 100, as will be explained in more detail below. The activity settings 140 communicates the selected activity setting to context aware NPC logic 110 so that the selected activity setting can be incorporated into the context aware code being added to NPC interactivity logic 104 to convert the NPC interactivity logic to NPC interactivity logic 104', as described in more detail above with reference to Figures 2 and 3.

To illustrate how low activity setting 140a and high activity setting 140b differ in a game scene, consider the example of the game scene which takes place in a saloon and in which the NPC 102 approaches the player character at the bar and starts a conversation. If the low activity setting 140a is selected, the NPC 102 will typically approach the player character relatively slowly, maintain an appropriate distance from the player character, and occasionally speak to the player character. On the other hand, if the high activity setting 140b is selected, the NPC 102 will typically approach the player character relatively quickly, assume a position that is physically close to the player character, and frequently speak to the player character. In some game scenes, the video game 100 will automatically select the activity setting based on the nature of the game scene. For example, if the player character is about to take an important shot in a target shooting game, the video game 100 could automatically select the low activity setting 140a so that the NPC 102 does not distract the player character during the process of taking the shot. Alternatively, if the high activity setting 140b is selected and the NPC 102 is repeatedly approaching the player character in a game scene to the point that the player character frustratedly tells the NPC 102 to "go away" or "leave me alone," the video game 100 could respond to the player character's frustration by automatically changing the activity setting to low activity setting 140a so that the NPC stops bothering the player character.

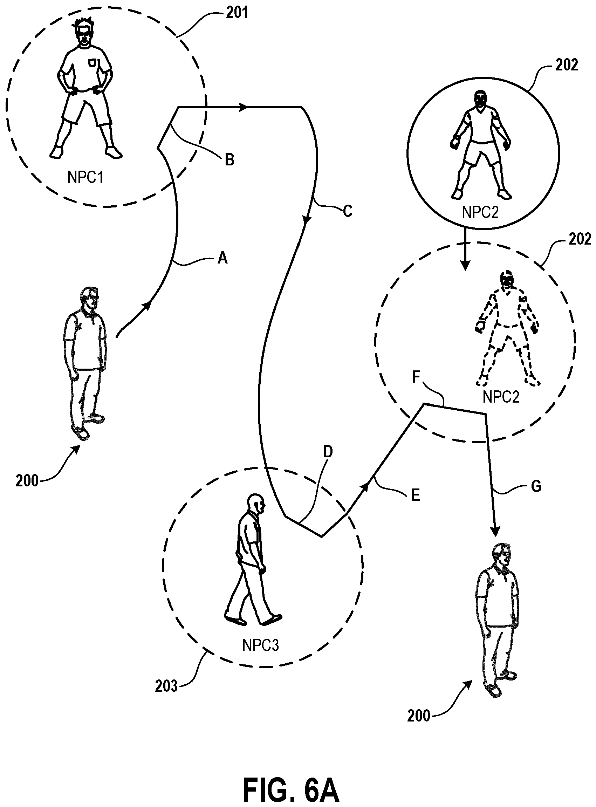

Figure 6A is a simplified schematic diagram that illustrates the mode switching that occurs as a player character moving within a game space encounters NPCs, in accordance with one embodiment. As shown in Figure 6A, player character 200 and three NPCs including NPC1, NPC2, and NPC3 are situated in a game space of a video game, e.g., video game 100 shown and described herein. Player character 200 moves about within the game space on a path that includes seven (7) legs, including legs A-G. As player character 200 approaches NPC1 along leg A, NPC1 remains stationary but, as can be seen in Figure 6A, is surrounded by a halo space 201. The halo space 201 surrounding NPC1 defines a region in which NPC1 is switched from off mode to on mode with regard to the use of context aware logic. In one embodiment, the size of the halo space 201 is a function of the interactivity taking place proximate to NPC1. Further, the size of the halo space 201 can be dynamically adjusted as the interactivity taking place proximate to NPC1 changes over time. Along leg B, player character 200 is within the region defined by halo space 201. Thus, NPC1 is switched from off mode to on mode while player character 200 travels within halo space 201. As can be seen in Figure 6A, player character 200 then leaves halo space 201 and heads toward NPC3 along leg C. Once player character 200 is outside of halo space 201, NPC1 is switched from on mode back to off mode.

As player character 200 approaches NPC3 along leg C, NPC 3, which is surrounded by halo space 203, remains stationary. Along leg D, player character 200 is within the region defined by halo space 203 and, consequently, NPC3 is switched from off mode to on mode. Once player character 200 has moved outside of halo space 203 along leg E, NPC3 is switched from on mode back to off mode. NPC2, which is surrounded by halo space 202, approaches the player character 200 as the player character travels along leg E. As can be seen in Figure 6A, halo space 202 moves with NPC2 as NPC2 approaches the player character 200. Along leg F, player character 200 is within the region defined by halo space 202 (as indicated by the dashed-line circle shown in Figure 6A), so NPC2 is switched from off mode to on mode. Once player character 200 has moved outside of halo space 202 along leg G, NPC 2 is switched from on mode back to off mode.

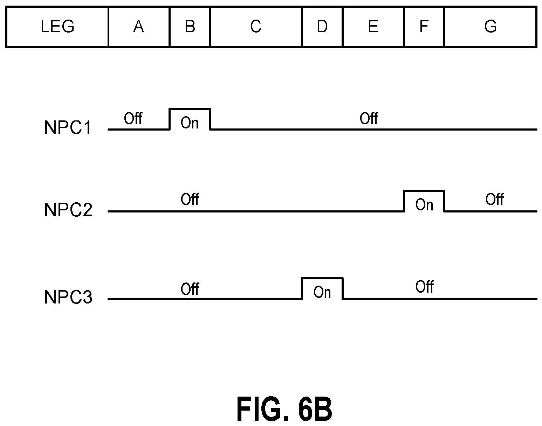

Figure 6B is a diagram that summarizes the mode switching for NPC1, NPC2, and NPC3 shown in Figure 6A. As shown in Figure 6B, during leg B of the path followed by player character 200, NPC1 is in on mode. For the other legs (legs A and C to G), NPC1 is in off mode. NPC2 is in on mode during leg F and is in off mode for the other legs (legs A to E and G). NPC 3 is in on mode for leg D and is in off mode for the other legs (legs A to C and legs E to G). In the off mode, the behavior of each of NPC1, NPC2, and NPC3 is controlled by code, e.g., NPC interactivity logic 104 (see, e.g., Figures 1-3), that defines random, preplanned behavior for each NPC. In the on mode, the behavior of each of NPC1, NPC2, and NPC3 is controlled by code, e.g., NPC interactivity logic 104' (see, e.g., Figures 2 and 3), that has been modified to include context aware logic that transforms the behavior of an NPC to be contextually interactive with the player character. By way of example, when NPC2 is in the on mode during leg F shown in Figure 6A, NPC2 can approach the player character 200 and give the player character advice regarding the game, give the player character a hint regarding the game, e.g., a hint regarding upcoming gameplay, deliver a personalized message to the player character, or give the player character a compliment, e.g., a compliment regarding a recent game move that was well executed by the player character.

Thus, to summarize mode switching, context aware logic is applied to an NPC for a period of time when the player character is either proximate to or within a halo space of the NPC in a game scene. Context aware logic is applied to other NPCs in the game scene when the player character is either proximate to or within a respective halo space of another NPC in the game scene. The behavior of an NPC is transformed to be contextually interactive with the player character for the period of time during which the context aware logic is applied to the NPC.

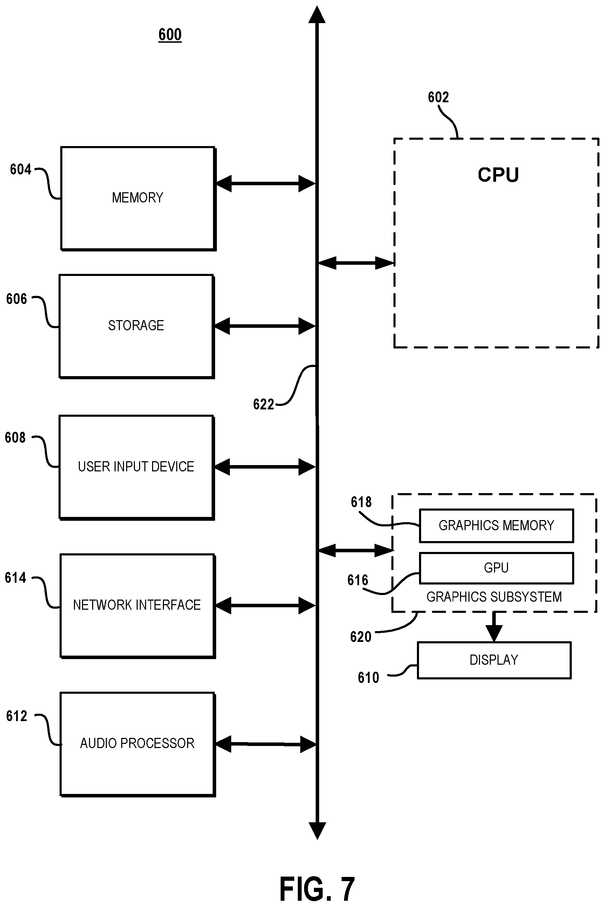

Figure 7 illustrates components of an example device 600 that can be used to perform aspects of the various embodiments of the present disclosure. In particular, the block diagram of Figure 7 illustrates a device 600 that can incorporate or can be a personal computer, video game console, personal digital assistant, a server or other digital device, suitable for practicing an embodiment of the disclosure. Device 600 includes a central processing unit (CPU) 602 for running software applications and optionally an operating system. CPU 602 may be comprised of one or more homogeneous or heterogeneous processing cores. For example, CPU 602 is one or more general-purpose microprocessors having one or more processing cores. Further embodiments can be implemented using one or more CPUs with microprocessor architectures specifically adapted for highly parallel and computationally intensive applications, such as processing operations of interpreting a query, identifying contextually relevant resources, and implementing and rendering the contextually relevant resources in a video game immediately. Device 600 may be local to a player playing a game segment or a user interacting in a virtual reality space (e.g., game console), or remote from the player or user (e.g., back-end server processor), or one of many servers using virtualization in a game cloud system for remote streaming of gameplay to clients or in a cloud system implementing a virtual reality space.

Memory 604 stores applications and data for use by the CPU 602. Storage 606 provides non-volatile storage and other computer readable media for applications and data and may include fixed disk drives, removable disk drives, flash memory devices, and CD-ROM, DVD-ROM, Blu-ray, HD-DVD, or other optical storage devices, as well as signal transmission and storage media. User input devices 608 communicate user inputs from one or more users to device 600, examples of which may include keyboards, mice, joysticks, touch pads, touch screens, still or video recorders/cameras, tracking devices for recognizing gestures, and/or microphones. Network interface 614 allows device 600 to communicate with other computer systems via an electronic communications network, and may include wired or wireless communication over local area networks and wide area networks such as the internet. An audio processor 612 is adapted to generate analog or digital audio output from instructions and/or data provided by the CPU 602, memory 604, and/or storage 606. The components of device 600, including CPU 602, memory 604, data storage 606, user input devices 608, network interface 610, and audio processor 612 are connected via one or more data buses 622.

A graphics subsystem 620 is further connected with data bus 622 and the components of the device 600. The graphics subsystem 620 includes a graphics processing unit (GPU) 616 and graphics memory 618. Graphics memory 618 includes a display memory (e.g., a frame buffer) used for storing pixel data for each pixel of an output image. Graphics memory 618 can be integrated in the same device as GPU 608, connected as a separate device with GPU 616, and/or implemented within memory 604. Pixel data can be provided to graphics memory 618 directly from the CPU 602. Alternatively, CPU 602 provides the GPU 616 with data and/or instructions defining the desired output images, from which the GPU 616 generates the pixel data of one or more output images. The data and/or instructions defining the desired output images can be stored in memory 604 and/or graphics memory 618. In an embodiment, the GPU 616 includes 3D rendering capabilities for generating pixel data for output images from instructions and data defining the geometry, lighting, shading, texturing, motion, and/or camera parameters for a scene. The GPU 616 can further include one or more programmable execution units capable of executing shader programs.

The graphics subsystem 620 periodically outputs pixel data for an image from graphics memory 618 to be displayed on display device 610. Display device 610 can be any device capable of displaying visual information in response to a signal from the device 600, including CRT, LCD, plasma, and OLED displays. Device 600 can provide the display device 610 with an analog or digital signal, for example.

It should be noted that access services, such as providing access to virtual reality spaces and games of the current embodiments, delivered over a wide geographical area often use cloud computing. Cloud computing is a style of computing in which dynamically scalable and often virtualized resources are provided as a service over the internet. Users do not need to be an expert in the technology infrastructure in the "cloud" that supports them. Cloud computing can be divided into different services, such as Infrastructure as a Service (IaaS), Platform as a Service (PaaS), and Software as a Service (SaaS). Cloud computing services often provide common applications, such as video games, online that are accessed from a web browser, while the software and data are stored on the servers in the cloud. The term cloud is used as a metaphor for the internet, based on how the internet is depicted in computer network diagrams and is an abstraction for the complex infrastructure it conceals.

A game server may be used to perform the operations of the durational information platform for video game players, in some embodiments. Most video games played over the internet operate via a connection to the game server. Typically, games use a dedicated server application that collects data from players and distributes it to other players. In other embodiments, the video game may be executed by a distributed game engine. In these embodiments, the distributed game engine may be executed on a plurality of processing entities (PEs) such that each PE executes a functional segment of a given game engine that the video game runs on. Each processing entity is seen by the game engine as simply a compute node. Game engines typically perform an array of functionally diverse operations to execute a video game application along with additional services that a user experiences. For example, game engines implement game logic, perform game calculations, physics, geometry transformations, rendering, lighting, shading, audio, as well as additional in-game or game-related services. Additional services may include, for example, messaging, social utilities, audio communication, game play replay functions, help function, etc. While game engines may sometimes be executed on an operating system virtualized by a hypervisor of a particular server, in other embodiments, the game engine itself is distributed among a plurality of processing entities, each of which may reside on different server units of a data center.

According to this embodiment, the respective processing entities for performing the operations may be a server unit, a virtual machine, or a container, depending on the needs of each game engine segment. For example, if a game engine segment is responsible for camera transformations, that particular game engine segment may be provisioned with a virtual machine associated with a graphics processing unit (GPU) since it will be doing a large number of relatively simple mathematical operations (e.g., matrix transformations). Other game engine segments that require fewer but more complex operations may be provisioned with a processing entity associated with one or more higher power central processing units (CPUs).

By distributing the game engine, the game engine is provided with elastic computing properties that are not bound by the capabilities of a physical server unit. Instead, the game engine, when needed, is provisioned with more or fewer compute nodes to meet the demands of the video game. From the perspective of the video game and a video game player, the game engine being distributed across multiple compute nodes is indistinguishable from a non-distributed game engine executed on a single processing entity, because a game engine manager or supervisor distributes the workload and integrates the results seamlessly to provide video game output components for the end user.

Users access the remote services with client devices, which include at least a CPU, a display and I/O. The client device can be a PC, a mobile phone, a netbook, a PDA, etc. In one embodiment, the network executing on the game server recognizes the type of device used by the client and adjusts the communication method employed. In other cases, client devices use a standard communications method, such as HTML, to access the application on the game server over the internet. It should be appreciated that a given video game, gaming application, or virtual reality space may be developed for a specific platform and a specific associated controller device. However, when such a game or virtual reality space is made available via a game cloud system or a cloud system implementing the virtual reality space, the user may be accessing the video game or virtual reality space with a different controller device. For example, a game or virtual reality space might have been developed for a game console and its associated controller, whereas the user might be accessing a cloud-based version of the game or virtual reality space from a personal computer utilizing a keyboard and mouse. In such a scenario, the input parameter configuration can define a mapping from inputs which can be generated by the user's available controller device (in this case, a keyboard and mouse) to inputs which are acceptable for the execution of the video game or interaction in the virtual reality space.

In another example, a user may access the cloud gaming system or the cloud system implementing a virtual reality space via a tablet computing device, a touchscreen smartphone, or other touchscreen driven device. In this case, the client device and the controller device are integrated together in the same device, with inputs being provided by way of detected touchscreen inputs/gestures. For such a device, the input parameter configuration may define particular touchscreen inputs corresponding to game inputs for the video game or the virtual reality space. For example, buttons, a directional pad, or other types of input elements might be displayed or overlaid during running of the video game to indicate locations on the touchscreen that the user can touch to generate a game input. Gestures such as swipes in particular directions or specific touch motions may also be detected as game inputs or inputs for interaction in the virtual reality space. In one embodiment, a tutorial can be provided to the user indicating how to provide input via the touchscreen for gameplay, e.g., prior to beginning gameplay of the video game, so as to acclimate the user to the operation of the controls on the touchscreen.

In some embodiments, the client device serves as the connection point for a controller device. That is, the controller device communicates via a wireless or wired connection with the client device to transmit inputs from the controller device to the client device. The client device may in turn process these inputs and then transmit input data to the cloud game server via a network (e.g., accessed via a local networking device such as a router). However, in other embodiments, the controller can itself be a networked device, with the ability to communicate inputs directly via the network to the cloud game server, without being required to communicate such inputs through the client device first. For example, the controller might connect to a local networking device (such as the aforementioned router) to send to and receive data from the cloud game server. Thus, while the client device may still be required to receive video output from the cloud-based video game and render it on a local display, input latency can be reduced by allowing the controller to send inputs directly over the network to the cloud game server, bypassing the client device.

In one embodiment, a networked controller and client device can be configured to send certain types of inputs directly from the controller to the cloud game server, and other types of inputs via the client device. For example, inputs the detection of which does not depend on any additional hardware or processing apart from the controller itself can be sent directly from the controller to the cloud game server via the network, bypassing the client device. Such inputs may include button inputs, joystick inputs, embedded motion detection inputs (e.g., accelerometer, magnetometer, gyroscope), etc. However, inputs that utilize additional hardware or require processing by the client device can be sent by the client device to the cloud game server. These might include captured video or audio from the game environment that may be processed by the client device before sending to the cloud game server. Additionally, inputs from motion detection hardware of the controller might be processed by the client device in conjunction with captured video to detect the position and motion of the controller, which would subsequently be communicated by the client device to the cloud game server. It should be appreciated that the controller device in accordance with various embodiments may also receive data (e.g., feedback data) from the client device or directly from the cloud gaming server.

In one embodiment, the various technical examples can be implemented using a virtual environment via a head-mounted display (HMD). An HMD may also be referred to as a virtual reality (VR) headset. As used herein, the term "virtual reality" (VR) generally refers to user interaction with a virtual space/environment that involves viewing the virtual space through an HMD (or VR headset) in a manner that is responsive in real-time to the movements of the HMD (as controlled by the user) to provide the sensation to the user of being in the virtual space or metaverse. For example, the user may see a three-dimensional (3D) view of the virtual space when facing in a given direction, and when the user turns to a side and thereby turns the HMD likewise, then the view to that side in the virtual space is rendered on the HMD. An HMD can be worn in a manner similar to glasses, goggles, or a helmet, and is configured to display a video game or other metaverse content to the user. The HMD can provide a very immersive experience to the user by virtue of its provision of display mechanisms in close proximity to the user's eyes. Thus, the HMD can provide display regions to each of the user's eyes which occupy large portions or even the entirety of the field of view of the user, and may also provide viewing with three-dimensional depth and perspective.

In one embodiment, the HMD may include a gaze tracking camera that is configured to capture images of the eyes of the user while the user interacts with the VR scenes. The gaze information captured by the gaze tracking camera(s) may include information related to the gaze direction of the user and the specific virtual objects and content items in the VR scene that the user is focused on or is interested in interacting with. Accordingly, based on the gaze direction of the user, the system may detect specific virtual objects and content items that may be of potential focus to the user where the user has an interest in interacting and engaging with, e.g., game characters, game objects, game items, etc.

In some embodiments, the HMD may include an externally facing camera(s) that is configured to capture images of the real-world space of the user such as the body movements of the user and any real-world objects that may be located in the real-world space. In some embodiments, the images captured by the externally facing camera can be analyzed to determine the location/orientation of the real-world objects relative to the HMD. Using the known location/orientation of the HMD the real-world objects, and inertial sensor data from the objects, the gestures and movements of the user can be continuously monitored and tracked during the user's interaction with the VR scenes. For example, while interacting with the scenes in the game, the user may make various gestures such as pointing and walking toward a particular content item in the scene. In one embodiment, the gestures can be tracked and processed by the system to generate a prediction of interaction with the particular content item in the game scene. In some embodiments, machine learning may be used to facilitate or assist in said prediction.

During HMD use, various kinds of single-handed, as well as two-handed controllers can be used. In some implementations, the controllers themselves can be tracked by tracking lights included in the controllers, or tracking of shapes, sensors, and inertial data associated with the controllers. Using these various types of controllers, or even simply hand gestures that are made and captured by one or more cameras, it is possible to interface, control, maneuver, interact with, and participate in the virtual reality environment or metaverse rendered on an HMD. In some cases, the HMD can be wirelessly connected to a cloud computing and gaming system over a network. In one embodiment, the cloud computing and gaming system maintains and executes the video game being played by the user. In some embodiments, the cloud computing and gaming system is configured to receive inputs from the HMD and the interface objects over the network. The cloud computing and gaming system is configured to process the inputs to affect the game state of the executing video game. The output from the executing video game, such as video data, audio data, and haptic feedback data, is transmitted to the HMD and the interface objects. In other implementations, the HMD may communicate with the cloud computing and gaming system wirelessly through alternative mechanisms or channels such as a cellular network.

Additionally, though implementations in the present disclosure may be described with reference to a head-mounted display, it will be appreciated that in other implementations, non-head mounted displays may be substituted, including without limitation, portable device screens (e.g. tablet, smartphone, laptop, etc.) or any other type of display that can be configured to render video and/or provide for display of an interactive scene or virtual environment in accordance with the present implementations. It should be understood that the various embodiments defined herein may be combined or assembled into specific implementations using the various features disclosed herein. Thus, the examples provided are just some possible examples, without limitation to the various implementations that are possible by combining the various elements to define many more implementations. In some examples, some implementations may include fewer elements, without departing from the spirit of the disclosed or equivalent implementations.

Embodiments of the present disclosure may be practiced with various computer system configurations including hand-held devices, microprocessor systems, microprocessor-based or programmable consumer electronics, minicomputers, mainframe computers and the like. Embodiments of the present disclosure can also be practiced in distributed computing environments where tasks are performed by remote processing devices that are linked through a wire-based or wireless network.

Although method operations may be described in a specific order, it should be understood that other housekeeping operations may be performed in between operations, or operations may be adjusted so that they occur at slightly different times, or may be distributed in a system which allows the occurrence of the processing operations at various intervals associated with the processing, as long as the processing of the telemetry and game state data are performed in the desired way.

One or more embodiments can also be fabricated as computer readable code on a computer readable medium. The computer readable medium is any data storage device that can store data, which can be thereafter be read by a computer system. Examples of the computer readable medium include hard drives, network attached storage (NAS), read-only memory, random-access memory, CD-ROMs, CD-Rs, CD-RWs, magnetic tapes and other optical and non-optical data storage devices. The computer readable medium can include computer readable tangible medium distributed over a network-coupled computer system so that the computer readable code is stored and executed in a distributed fashion.

In one embodiment, the video game is executed either locally on a gaming machine, a personal computer, or on a server. In some cases, the video game is executed by one or more servers of a data center. When the video game is executed, some instances of the video game may be a simulation of the video game. For example, the video game may be executed by an environment or server that generates a simulation of the video game. The simulation, on some embodiments, is an instance of the video game. In other embodiments, the simulation maybe produced by an emulator. In either case, if the video game is represented as a simulation, that simulation is capable of being executed to render interactive content that can be interactively streamed, executed, and/or controlled by user input.

Accordingly, the disclosure of the example embodiments is intended to be illustrative, but not limiting, of the scope of the disclosures, as set forth in the following claims. Although example embodiments of the disclosures have been described in some detail for purposes of clarity of understanding, it will be apparent that certain changes and modifications can be practiced within the scope and equivalents of the following claims. In the following claims, elements and/or steps do not imply any particular order of operation, unless explicitly stated in the claims or implicitly required by the disclosure.

*What is claimed is:*

## Claims

1. A method for generating nonplayer characters that are context aware in video games, comprising:
executing a video game to enable gameplay using a player character controlled by a player, wherein the gameplay produces game state data;
during execution of the video game, identifying scene interactivity data from the game state data;
filtering the scene interactivity data based on filtering settings, the filtering is configured to identify target interactivity data that is processed to generate context aware logic; and
applying the context aware logic to a nonplayer character, NPC, that is associated with a current scene of gameplay, the context aware logic transforms a behavior of the NPC to be contextually interactive with the player character during the gameplay by the player.

2. The method of claim 1, wherein the context aware logic is compiled and instrumented to execute with interactivity logic of the NPC, and wherein the behavior of the NPC is transformed for a period of time during which the context aware logic is applied.

3. The method of claim 2, wherein a gameplay mode defines when the context aware logic is applied.

4. The method of claim 1, wherein the behavior of the NPC is transformed to be contextually interactive with the player character by causing the NPC to engage in speech communication with the player character.

5. The method of claim 1, wherein the behavior of the NPC is transformed to be contextually interactive with the player character by causing the NPC to perform an action in relation to the player character.

6. The method of claim 1, wherein the behavior of the NPC is transformed to be contextually interactive with the player character by causing the NPC to provide assistance to the player character.

7. The method of claim 1, further comprising:
applying activity settings that define whether a lower degree of context aware logic or a higher degree of context aware logic is to be applied to the NPC,
wherein applying a lower degree of context aware logic to the NPC reduces a degree to which the NPC is contextually interactive with the player character during gameplay by the player, and applying a higher degree of context aware logic to the NPC increases a degree to which the NPC is contextually interactive with the player character during gameplay by the player.

8. The method of claim 1, wherein, during execution of the video game, the target interactivity data is continuously generated for a current scene of gameplay, and the processing of the target interactivity data includes executing a context interactivity model that analyzes classified features of the target interactivity data to generate a descriptive interactivity context for the current scene.

9. The method of claim 8, further comprising:
processing a generative artificial intelligence, AI, model that uses inputs regarding the descriptive interactivity context for the current scene, game training data from the video game, and user profile data,
wherein the generative AI model is configured to produce the context aware logic.

10. The method of claim 1, wherein video game is an online game having one or more spectators, or a non-online game.

11. The method of claim 10, wherein the target interactivity data includes comments from one or more spectators, and the behavior of the NPC is transformed by having the NPC communicate a sentiment of the one or more spectators to the player character.

12. The method of claim 11, further comprising:
applying mode settings that moderate an amount and a type of the sentiment of the one or more spectators that the NPC communicates to the player character.

13. A non-transitory computer readable medium containing program instructions for generating a nonplayer character for a video game, wherein execution of the program instructions by one or more processors of a computer system causes the one or more processors to carry out the operations of any one or more of claims 1-12.

14. A system for generating nonplayer characters that are context aware in video games, comprising:
means for executing a video game to enable gameplay using a player character controlled by a player, wherein the gameplay produces game state data;
means for identifying scene interactivity data from the game state data during execution of the video game;
means for filtering the scene interactivity data based on filtering settings, the filtering is configured to identify target interactivity data that is processed to generate context aware logic; and
means for applying the context aware logic to a nonplayer character, NPC, that is associated with a current scene of gameplay, the context aware logic transforms a behavior of the NPC to be contextually interactive with the player character during the gameplay by the player.

15. The system of claim 14, further comprising:
means for applying activity settings that define whether a lower degree of context aware logic or a higher degree of context aware logic is to be applied to the NPC,
wherein applying a lower degree of context aware logic to the NPC reduces a degree to which the NPC is contextually interactive with the player character during gameplay by the player, and applying a higher degree of context aware logic to the NPC increases a degree to which the NPC is contextually interactive with the player character during gameplay by the player.
